# EUROPEAN PATENT APPLICATION

(11) **EP 1 988 595 A1**
(43) Date of publication of application: **05.11.2008**
(21) Application number: 07707454.0
(22) Date of filing: 19.01.2007
(51) Int. Cl.: H01M 10/38, H01M 10/36, H01M 10/40

(54) **ELECTRODE LAMINATE AND BIPOLAR SECONDARY BATTERY**

(30) Priority: 31.01.2006 JP 2006023297
(71) Applicant: Toyota Jidosha Kabushiki Kaisha, Toyota-shi, Aichi 471-8571 (JP)
(72) Inventor: TATEMATSU, Kazutaka, Aichi 471-8571 (JP); MIZUTANI, Ryoji, Aichi 471-8571 (JP); YAMADA, Eiji, Aichi 471-8571 (JP); ENDO, Yasuhiro, Aichi 471-8571 (JP)
(74) Representative: Albutt, Anthony John
(86) International application number: PCT/JP2007/051222
(87) International publication number: WO 2007/088778

(57) **Abstract**

An electrode stack includes a cathode active material layer (26) and an anode active material layer (28) stacked together, and an electrolyte layer (27) arranged between the cathode active material layer (26) and the anode active material layer (28). A through hole 32 extending in the stacking direction of the cathode active material layer (26) and anode active material layer (28) is formed in the cathode active material layer (26), anode active material layer (28) and the electrolyte layer (27). The electrode stack further includes a bolt (35) inserted to the hole (32) for integrally holding the cathode active material layer (26), anode active material layer (28) and the electrolyte layer (27). By such a structure, an electrode stack and a bipolar secondary battery that can effectively prevent displacement of interface between each of the cathode, anode and the electrolyte can be provided.

## Description

### Technical Field

The present invention generally relates to an electrode stack and specifically to an electrode stack and a bipolar secondary battery using solid electrolyte or gel electrolyte.

### Background Art

In connection with a conventional electrode stack, by way of example, Japanese Patent Laying-Open No. 2004-47161 (Patent Document 1) discloses a secondary battery aimed at improving adhesion between battery elements and reducing expansion of the battery when gas generates. According to Patent Document 1, a battery element consisting of a cathode, an anode and a solid electrolyte is clipped by two plate members. The battery element and the plate members are integrally held by a tape wound around the plate members. In place of the tape, rubber, a band, a clip, a string or the like may be used.

Japanese Patent Laying-Open No. 2004-31281 (Patent Document 2) discloses a cooling structure for an electrode-stacked type battery, in which the battery is pressed from opposite surfaces, aimed at improved cooling property while not increasing the number of components. According to Patent Document 2, a plurality of electrode-stacked type battery cells including cathode plates, anode plates and separators are stacked, with pressing plates interposed. The pressing plates are provided to protrude from peripheral edges of the electrode-stacked type battery cells. The plurality of battery-stacked type battery cells are held integrally by a fixing bolt inserted through the pressing plates at the protruded position.

According to Patent Documents mentioned above, the plate members or pressing plates arranged on opposite sides of the battery elements are fastened to each other by using a tape, rubber, fixing bolt or the like, to clip the battery elements. Such a fastening method, however, may lead to displacement of interface between the cathode, anode and electrolyte forming the battery element.

### Disclosure of the Invention

An object of the present invention is to solve the above-described problems and to provide an electrode stack and a bipolar secondary battery in which displacement of the interface between cathode, anode and electrolyte can effectively be prevented.

The electrode stack in accordance with the present invention includes a cathode and an anode stacked together, and an electrolyte arranged between the cathode and the anode. The cathode, anode and electrolyte have through holes formed in the direction of stacking of the cathode and anode. The electrode stack further includes a shaft member passed through the hole and integrally holding the cathode, anode and the electrolyte.

In the electrode stack structured in this manner, the shaft member is arranged to pass through the cathode, anode and the electrolyte and, therefore, displacement of the interference between the cathode, anode and electrolyte can effectively be prevented. Thus, increase in interface resistance can be curbed.

Preferably, the shaft member is a bolt. In the electrode stack structured in this manner, the cathode, anode and electrolyte are fastened by the bolt and, therefore, the effects mentioned above can more effectively be attained.

Preferably, the shaft member is formed of an insulating material. Preferably, an insulating member is arranged between an inner wall of the hole and the bolt. In the electrode stack structured in this manner, short-circuit between electrodes through the shaft member can be prevented.

Preferably, the electrolyte is a solid electrolyte. In the electrode stack structured in this manner, leakage of electrolyte from the electrode stack can be prevented.

According to an aspect, the present invention provides a secondary battery using any of the stacked electrode bodies described above. A bipolar secondary battery refers to a battery having both cathode and anode provided on one electrode plate. In the bipolar secondary battery structured in this manner, increase in interface resistance of the electrode stack is curbed and, therefore, reliability of the bipolar secondary battery can be improved.

As described above, according to the present invention, an electrode stack and a bipolar secondary battery that can effectively prevent displacement of interface between the cathode, anode and electrolyte can be provided.

### Brief Description of the Drawings

Fig. 1 is a perspective view showing a bipolar secondary battery to which the structure of the electrode stack in accordance with an embodiment of the present invention is applied.
Fig. 2 is a cross-sectional view of the bipolar secondary battery taken along the line II-II of Fig. 1.
Figs. 3A and 3B are top views showing a first modification of the bipolar secondary battery of Fig. 1.
Fig. 4 is a cross-sectional view showing a second modification of the bipolar secondary battery of Fig. 1.
Fig. 5 is a cross-sectional view showing a third modification of the bipolar secondary battery of Fig. 1.
Fig. 6 is a cross-sectional view showing a fourth modification of the bipolar secondary battery of Fig. 1.
Fig. 7 is a cross-sectional view showing a fifth modification of the bipolar secondary battery of Fig. 1.

### Best Modes for Carrying Out the Invention

An embodiment of the present invention will be described with reference to the figures. In the figures referred to in the following, the same or corresponding portions are denoted by the same reference characters.

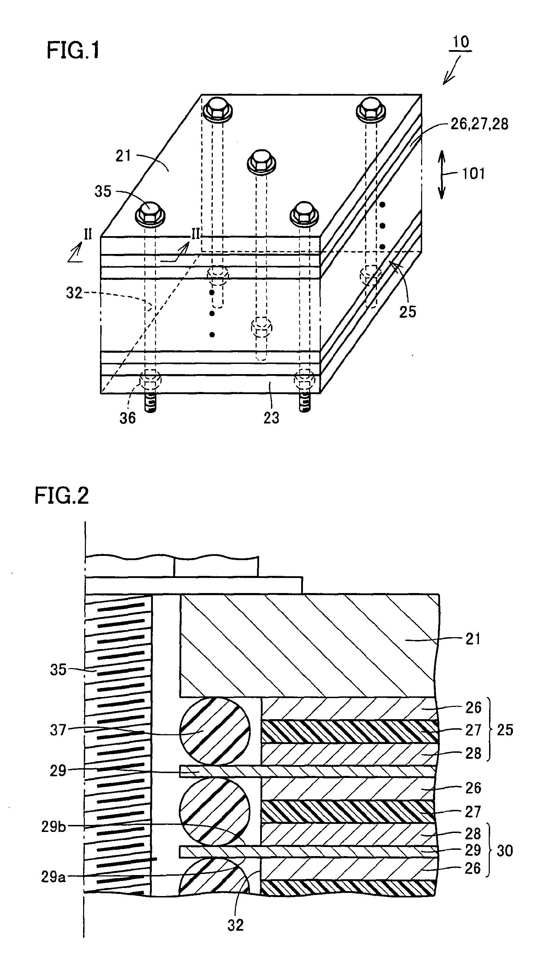

Fig. 1 is a perspective view showing a bipolar secondary battery to which the structure of the electrode stack in accordance with an embodiment of the present invention is applied. Referring to Fig. 1, a bipolar secondary battery 10 is mounted as an electric power supply in a hybrid vehicle using, as power sources, an internal combustion engine such as a gasoline engine or a diesel engine and a rechargeable electric power supply. Bipolar secondary battery 10 is formed of a lithium ion battery.

Bipolar secondary battery 10 is formed with a plurality of battery cells 25 stacked in the direction indicated by an arrow 101. Bipolar secondary battery 10 has an approximately rectangular parallelepiped shape. Bipolar secondary battery 10 may have a thin flat shape, with the length in the stacking direction of battery cells 25 being shorter than the length of other sides.

Fig. 2 is a cross-sectional view of the bipolar secondary battery taken along the line II-II of Fig. 1. Referring to Figs. 1 and 2, bipolar secondary battery 10 includes a plurality of bipolar electrodes 30.

Each bipolar electrode 30 consists of a sheet-type collector foil 29, a cathode active material layer 26 formed on one surface 29a of collector foil 29, and an anode active material layer 28 formed on the other surface 29b of collector foil 29. Specifically, in bipolar secondary battery 10, both the cathode active material layer 26 serving as the cathode and the anode active material layer 28 serving as the anode are formed on one bipolar electrode 30.

The plurality of bipolar electrodes 30 are stacked in the same direction as the stacking direction of battery cells 25, with electrolyte layers 27 interposed. Electrolyte layer 27 is formed of a material having ion conductivity. Electrolyte layer 27 may be a solid electrolyte or gel electrolyte. Insertion of electrolyte layer 27 makes smooth ion conduction between cathode active material layer 26 and anode active material layer 28, improving output of the bipolar secondary battery 10.

Cathode active material layer 26 and anode active material layer 28 oppose to each other between bipolar electrodes 30 positioned next to each other in the stacking direction. Cathode active material layer 26, electrolyte layer 27 and anode active material layer 28 positioned between adjacent collector foils 29 constitute a battery cell 25.

On one end in the stacking direction of battery cells 25, cathode active material layer 26 is arranged. In contact with cathode active material layer 26, cathode collector plate 21 is provided. On the other end in the stacking direction of battery cells 25, anode active material layer 28 is arranged. In contact with anode active material layer 28, anode collector plate 23 is provided. Specifically, on opposite ends of bipolar secondary battery 10 in the stacking direction of battery cells 25, cathode collector plate 21 and anode collector plate 23 are provided. The stacked plurality of battery cells 25 are held between cathode collector plate 21 and anode collector plate 23. Provision of cathode collector plate 21 and anode collector plate 23 are not essential.

Collector foil 29 is formed, for example, of aluminum. Here, even if the active material layer provided on the surface of collector foil 29 contains solid polymer electrolyte, it is possible to ensure sufficient mechanical strength of collector foil 29. Collector foil 29 may be formed by providing aluminum coating on metal other than aluminum such as copper, titanium, nickel, stainless steel (SUS) or an alloy of these.

Cathode active material layer 26 includes a cathode active material and a solid polymer electrolyte. Cathode active material layer 26 may contain a supporting salt (lithium salt) for improving ion conductivity, a conduction assistant for improving electron conductivity, NMP (N-methyl-2-pyrrolidone) as a solvent for adjusting slurry viscosity, AIBN (azobisisobutyronitrile) as a polymerization initiator or the like.

As the cathode active material, composite oxide of lithium and transition metal generally used in a lithium ion secondary battery may be used. Examples of the cathode active material may include Li/Co based composite oxide such as LiCoO₂, Li/Ni based composite oxide such as LiNiO₂, Li/Mn based composite oxide such as spinel LiMn₂O₄, and Li/Fe based composite material such as LiFeO₂. Other examples are phosphate compound or sulfate compound of transition metal and lithium such as LiFePO₄; oxide of transition metal or sulfide such as V₂O₅, MnO₂, TiS₂, MoS₂ and MoO₃; PbO₂, AgO, NiOOH and the like.

The solid polymer electrolyte is not specifically limited and it may be any ion-conducting polymer. For example, polyethylene oxide (PEO), polypropylene oxide (PPO) or copolymer of these may be available. Such a polyalkylene oxide based polymer easily dissolves lithium salt such as LiBF₄, LiPF₆, LiN(SO₂CF₃)₂, or LiN(SO₂C₂F₅)₂. The solid polymer electrolyte is included in at least one of cathode active material layer 26 and anode active material layer 28. More preferably, the solid polymer electrolyte is included both in cathode active material layer 26 and anode active material layer 28.

As the supporting salt, Li(C₂F_{S}SO₂)₂N, LiBF₄, LiPF₆, LiN(SO₂C₂F₅)₂ or a mixture of these may be used. As the electron conduction assistant, acetylene black, carbon black, graphite or the like may be used.

Anode active material layer 28 includes an anode active material and a solid polymer electrolyte. The anode active material layer may contain a supporting salt (lithium salt) for improving ion conductivity, a conduction assistant for improving electron conductivity, NMP (N-methyl-2-pyrrolidone) as a solvent for adjusting slurry viscosity, AIBN (azobisisobutyronitrile) as a polymerization initiator or the like.

As the anode active material, a material generally used in a lithium ion secondary battery may be used. If a solid electrolyte is used, however, it is preferred to use a composite oxide of carbon or lithium and metal oxide or metal, as the anode active material. More preferably, the anode active material is formed of a composite oxide of carbon or lithium and transition metal. Further preferably, the transition metal is titanium. Specifically, it is more preferred that the anode active material is of a composite oxide of titanium oxide or titanium and lithium.

As the solid electrolyte forming electrolyte layer 27, by way of example, a solid polymer electrolyte such as polyethylene oxide (PEO), polypropylene oxide (PPO) or copolymer of these may be used. The solid electrolyte contains supporting salt (lithium salt) for ensuring ion conductivity. As the supporting salt, LiBF₄, LiPF₆, LiN(SO₂CF₃)₂, LiN(SO₂C₂F₅)₂ or a mixture of these may be used.

Specific examples of materials for cathode active material layer 26, anode active material layer 28 and electrolyte layer 27 are listed in Tables 1 to 3. Table 1 shows specific examples when electrolyte layer 27 is of an organic solid electrolyte, Table 2 shows specific examples when electrolyte layer 27 is of an inorganic solid electrolyte, and Table 3 shows specific examples when electrolyte layer 27 is of a gel electrolyte.

**Table 1**

| Cathode material | Anode material | Solid electrolyte | Remarks |
|---|---|---|---|
| LiMn₂O₄ | Li metall | P(EO/MEEGE) | ·electrolyte salt:LiBF₄ |
| - | Li metal | P(EO/PEG-22) | ·electrolyte salt:LiN(CF₃SO₂)₂(LiTFSI) |
| LiCoO₂ | carbon | PVdF base | - |
| LiCOO₂ | Li metal | ether based polymer P(EO/EM/AGE) | -electrolyte salt:LiTFSI ·electrolyte salt:LiTFSI P(EO/EM)+LiBF₄ tocathode ·ion conducting material binder:mix P(EO/EM)+LiBF₄ to cathode |
| Li_{0.33}MnO₂ | Li metal | P(EO/EM/AGE) | -electrolyte salt:LiTFSI -ion conducting material binder.mix PEO-based solid polymer+LiTFSI to cathode |
| Li_{0.33}MnO₂ Lin_{0.33}MnO₂ | Li metal | PEO base+inorganic additive | ·electrolyte salt:LiClO₄ ·ion conducting matenal:mix KB+PEG+LiTFSI to cathode |
| - | - | PEG-PMMA+PEG-borate ester | ·electrolyte salt:LIiFSI, BGBLi |
| - | - | PEO base+10mass%0.6Li₂S+0.4SiS₂ | ·electrolyte salt:LiCF₃SO₃ |
| - | Li metal | PEO base+ perovskite type La_{0.55}Li_{0.35}TiO₃ | ·electrolyte salt:LiCF₃SO₃ |
| Li metal | - | styrene/ethylene oxide-block-graft polymer(PSEO) | ·electrolyte salt:LiTFSI ·ion conducting material:mix KB+PVdF+PEG+LiTFSI to cathode |
| LiCoO₂ | metal | P(DMS/EO)+polyether cross link | - |
| Li_{0.33}MnO₂ | Li metal | prepolymer composition mainly consisting of urethane acrylate (PUA) | ·electrolyte salt:LiTFSI ·ion conducting material:mix KB+PVdF+PEG+LiTFSI to cathode |
| - | - | multibranched graft polymer (MMA+CMA+POEM) | ·electrolyte salt:LiClO₄ |
| LiNi₀.₈Co_{0.2} O₂ | Li metal | PEO/multibranched polymer/filler based composite solid electrolyte (PEO+HBP+BaTiO₃) | ·electrolyte salt:LiTFSI -mix SPE+AB to cathode |
| - | - | PME400+Group 13 metal alkoxide (as Lewis acid) | ·electrolyte salt:LiCl |
| - | - | matrix containing poly (N-methylvinylimidazoline) (PNMVI) | .electrolyte salt:LiClO₄ |
| LiCoO₂ | Li metal | polymerize methoxy polyethylene glycol monomethyl meso acrylate using ruthenium complex by living radical polymerization, further polymerize with styrene | ·electrolyte salt:LiClO₄ ·cathode conducting material KB+ binder PVdF |
| LiCoO₂ | Li metal | P(EO/EM)+ether based plasticizer | ·electrolyte salt:LiTFSI -cathode conducting material KB+ binder PVdF |

**Table 2**

| Cathode material | Anode material | Solid Electrolyte | Remarks |
|---|---|---|---|
| LiCoO₂ | In | 95(0.6Li₂·0.4SiS₂)·5Li₄SiO₄ (Li₂S-SiS₂ based melt rapid cooled glass) | ·state:glass |
| - | - | 70Li₂S·30P₂S₅Li_{1.4}P_{0.6}S_{2.2}Sulfide glass Li₂S-P₂S₅ based glass ceramics) | ·state:glass ·forming method:mechanochemical |
| - | - | Li_{0.35}La_{0.55}TiO₃(LLT) (perovskite type structure) | ·state:ceramics ·form solid electrolyte porous body, fill pores with active material sol |
| - | - | 80Li₂S-20P₂S₅ (Li₂S-P₂S₅ based glass ceramics) | ·state:glass ·forming method:mechanochemical |
| - | - | xSrTiO₃·(1-x)LiTaO₃ (perovskite type oxide) | ·state:ceramics |
| LiCoO₂ | Li-In metal | Li_{3.4}Si_{0.4}4P_{0.6}S₄ (thio-LiSICON Li ion conductor) | ·state:ceramics |
| - | - | (Li_{0.1}La_{0.3})ₓZr_{y}Nb_{1-y}O₃ (perovskite type oxide) | ·state:ceramics |
| - | - | Li₄B₇O₁₂Cl | ·state: ceramics ·combine PEG as organic compound |
| - | - | Li₄GeS₄-Li₃PS₄ based crystal Li_{3.25}Ge_{0.25}P_{0.75}S₄ (thio-LISICON Li ion conductor) | ·state:ceramics |
| - | Li metal In metal | 0.01 Li₃PO₄-0.63Li₂S-0.36SiS₂ (thio-LiSICON Li ion conductor) | ·state:ceramics |
| LiCoO₂LiFePO₄ LiMn_{0.6}Fe_{0.4}PO₄ | Li metal V₂O₅ | -Li₃PO₄₋ₓNₓ(LiPON) (lithium phosphate oxynitride glass) | ·state:glass |
| Al_{0.05}O₂ | Li metal | Li₃InBr₃Cl₃ (rock salt type Li ion conductor) | ·state:ceramics |
| - | - | 70Li₂S·(30-x)P₂S₅·xP₂O₅ (Li₂S-P₂S₅-P₂O₅ based glass ceramics) | ·state:glass |
| LiCOO₂ etc. | Sn based oxide | Li₂O-B₂O₃-P₂O₅ base, Li₂O-V₂O₅-SiO₂ base, Li₂O-TiO₂-P₂O₅ base, LVSO etc. Li₂O-TiO₂-P₂O₅ base. LVSO etc. | state:glass ·state:glass |
| - | - | LiTi₂(PO₃)₄(LTP) (NASICON type structure) | ·state:ceramics |

**Table 3**

| Cathode material | Anode material | Polymer base | Remarks |
|---|---|---|---|
| Ni based collector | Li metal | acrylonitrile vinyl acetate (PAN-VAc based gel electrolyte) | ·solvent:EC+PC ·electrolyte salt:LiBF₄, LiPF_{6,}, LiN(CF₃SO₂)₂ |
| lithium electrode | lithium electrode | triethylene glycolmethyl methacrylate (polymethyl methacrylate (PMMA) based gel electrolyte) | ·solvent:EC+PC ·electrolyte salt:LiBF₄ |
| V₂O₅/PPy composite body | Li metal | methyl methacrylate (PMMA gel electrolyte) | ·solvent:EC+DEC ·electrolyte salt: LiClO₄ |
| Li metal | Li metal | PEO/PS polymer blend gel electrolyte | ·solvent:EC+PC ·electrolyte salt:LiClO₄ |
| Li metal | Li metal | alkylene oxide based polymer electrolyte | ·solvent:PC ·electrolytes alt:LiClO₄ |
| Li metal & LiCoO₂ | Li metal | alkylene oxide based polymer electrolyte | .solvent:EC+GBL .electrolyte salt:LiBF₄ |
| Li metal | Li metal | polyolefin based base polymer | .solvent:EC+PCE .electrolyte salt:LiBF₄ |
| Li_{0.36}CoO₂ | Li metal | polyvinylidenefluoride (PVDF) + propylene hexafluoride (HFP) (PVDF-HFP gel electrolyte) | ·solvent:EC+DMC ·electrolyte salt:LiN(CF₃SO₂)₂ |
| LiCoO₂ | Li metal | PEO based and acryl based polymer | ·solvent:EC+PC ·electrolyte salt:LiBF₄ |
| Li metal | Li metal | trimethylol propane ethoxylate acrylate (ether based polymer) | ·solvent:PC ·electrolyte salt:LiBETI, LiBF₄, LiPF₆ |
| - | - | EO-PO copolymer | ·electrolyte salt:LiTFSI, LiBF₄, LiPF₆ |
| - | - | poly aziridine compound poly aziridine compound | ·solvent: EC+DEC ·electrolyte salt:LIPF₆ |
| - | PAS (polyacene) | PVdF-HFP gel electrolyte | ·soivent:PC EC+DEC electrolyte salt: LiClO₄, Li(C₂F₅SO₂)₂N |
| - | - | urea based lithium polymer gel electrolyte | ·solvent:EC+DMC ·electrolyte salt:LiPF₆ |
| - | - | polyether/polyurethane based (PEO-NCO) gel electrolyte | ·solvent:PC ·electrolyte salt:LiClO₄ |
| - | - | cross-linked polyalkylene oxide based gel polymer electrolyte | - |

Bipolar secondary battery 10 has a thorough hole 32 formed extending from cathode collector plate 21 to anode collector plate 23. Through hole 32 extends in the direction of stacking of battery cells 25, and open at opposite end surfaces of bipolar secondary battery 10 in the stacking direction. There are a plurality of through holes 32. Through holes 32 are opened at four corners and at the central portion of the end surfaces of cathode collector plate 21 and anode collector plate 23 having approximately rectangular shape. Through hole 32 is formed in cathode collector plate 21 and anode collector plate 23, cathode active material layer 26, collector plate 29 and anode active material layer 26 constituting bipolar electrode 30, and in electrolyte layer 27 interposed between bipolar electrodes 30.

A bolt 35 is inserted to through hole 32. In order to prevent short-circuit between electrodes, bolt 35 is formed of an insulating material such as a highly insulating metal, ceramics or the like. Respective layers constituting bipolar secondary battery 10 are held integrally together by bolt 35 and a nut 36 screwed on bolt 35. Respective layers constituting bipolar secondary battery 10 is held integrally by the axial force generated by bolt 35.

By such a structure, assembly for integrating layers forming the bipolar secondary battery 10 can be done in a simple manner without using any special tool. Further, by regulating torque of bolt 35 at the time of fastening or changing the number of bolts 35, binding force of stacked battery cells 25 can easily be adjusted.

Further, when charging/discharging takes place, electrons/ions move, resulting in dimensional variation of electrodes. Therefore, repeated charging/discharging may cause a space between electrodes and change in internal resistance, so that battery performance may possibly degrade. In this regard, according to the present embodiment, bolts 35 are provided with a narrow pitch and, therefore, it becomes possible to press the electrodes uniformly in a plane orthogonal to the stacking direction of battery cells 25. As a result, variation in dimensional change generated in electrodes can be mitigated, and degradation of battery performance can be prevented.

A ring-shaped seal member 37 is provided in through hole 32. Seal member 37 is arranged between collector foils 29 adjacent in the stacking direction of battery cells 25. Seal member 37 seals the space where electrolyte layer 27 is provided, off from the space where bolt 35 is inserted. By such a structure, leakage of electrolyte layer 27 through the through hole 32 can be prevented. If the electrolyte layer 27 is formed of a solid electrolyte, seal member 37 may not be provided.

In bipolar secondary battery 10 having such a structure as described in the foregoing, battery capacity can be increased by setting large the area of the plane orthogonal to the stacking direction of battery cells 25, and hence, it can easily be made thin. Thus, flexibility of installing bipolar secondary battery 10 can be improved, as it may be arranged below a seat or under the floor.

The electrode stack in accordance with the embodiment of the present invention includes cathode active material layer 26 as the cathode and anode active material layer 28 as the anode stacked together, and electrolyte layer 27 as the electrolyte arranged between cathode active material layer 26 and anode active material layer 28. In cathode active material layer 26, anode active material layer 28 and electrolyte layer 27, through hole 32 is formed as a hole penetrating in the stacking direction of cathode active material layer 26 and anode active material layer 28. The electrode stack further includes bolt 35 as a shaft member inserted through the through hole 32 for integrally holding cathode active material layer 26, anode active material layer 28 and electrolyte layer 27.

In the electrode stack formed in this manner in accordance with the present embodiment, bolt 35 is inserted to the through hole 32 extending in the stacking direction of battery cells 25 and, therefore, displacement of interface between each of the layers forming bipolar secondary battery 10 can be prevented. Thus, it becomes possible to maintain the battery performance of bipolar secondary battery 10 for a long period of time.

In the present embodiment, though bipolar secondary battery 10 is described as implemented by a lithium ion battery, it is not limiting and it may be formed of a secondary battery other than the lithium ion battery. Typically the electrode stack in accordance with the present invention is applied to a bipolar secondary battery having a number of electrodes stacked one after another. The present invention, however, may also be applied to a monopolar secondary battery.

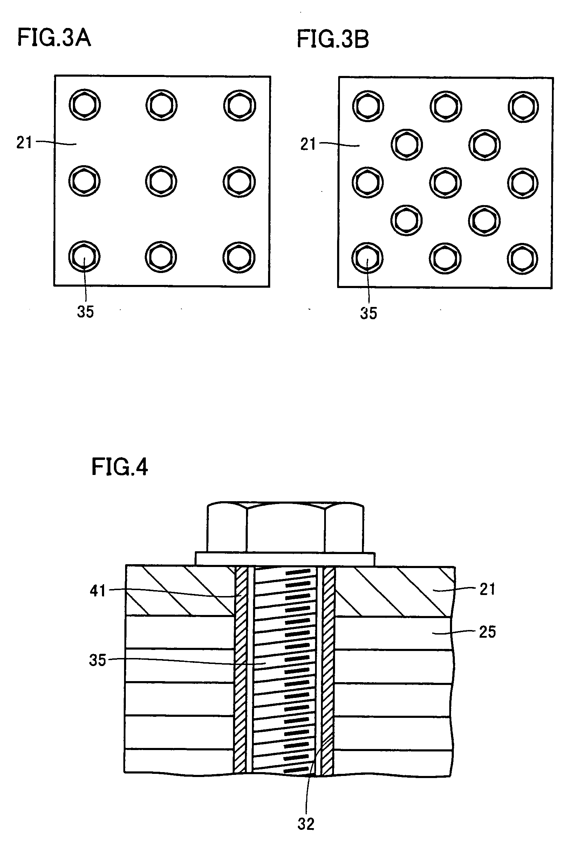

Next, modifications of bipolar secondary battery 10 shown in Fig. 1 will be described. Figs. 3A and 3B are top views showing a first modification of the bipolar secondary battery of Fig. 1.

Referring to Fig. 3A, in the present modification, bolts 35 are arranged in a lattice on the end surfaces of cathode collector plate 21 and anode collector plate 23 having approximately rectangular shape. Referring to Fig. 3B, in the present modification, bolts 35 are arranged in a staggered manner on the end surfaces of cathode collector plate 21 and anode collector plate 23 having approximately rectangular shape. In these modifications, bolts 35 are arranged at an equal pitch. Such arrangements make it easier to uniformly press electrodes in the plane orthogonal to the stacking direction of battery cells 25.

Fig. 4 is a cross-sectional view showing a second modification of the bipolar secondary battery of Fig. 1. Referring to Fig. 4, in the present modification, an insulating sleeve 41 having a cylindrical shape is positioned in through hole 32. Insulating sleeve 41 is formed of an insulating material such as resin. Insulating sleeve 41 is arranged between the inner wall of through hole 32 and bolt 35. Because of such a structure, even when bolt 35 is formed of a conductive metal, short-circuit between electrodes can be prevented by insulating sleeve 41.

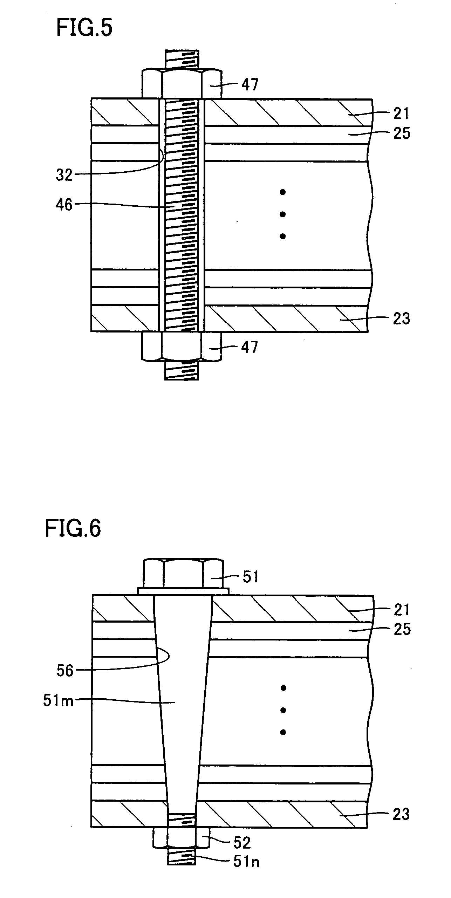

Fig. 5 is a cross-sectional view showing a third modification of the bipolar secondary battery of Fig. 1. Referring to Fig. 5, in the present modification, in place of bolt 35 and nut 36 of Fig. 1, a stud bolt 46 and nuts 47 screwed on stud bolt 46 are provided. By such a structure also, layers constituting bipolar secondary battery 10 can be integrally held by the axial force generated by stud volt 46.

Fig. 6 is a cross-sectional view showing a fourth modification of the bipolar secondary battery of Fig. 1. Referring to Fig. 6, in the present modification, in place of through hole 32 of Fig 1, a tapered hole 56 is formed in bipolar secondary battery 10. Tapered hole 56 is formed with its opening area increased gradually from cathode collector plate 21 to anode collector plate 23. In tapered hole 56, a tapered bolt 51 is inserted. Tapered bolt 51 has a tapered portion 51 to be fit in tapered hole 56 and a screwed portion 51n on which a nut 52 is screwed. By such a structure, displacement of interface between each of the layers constituting bipolar secondary battery 10 can more effectively be prevented.

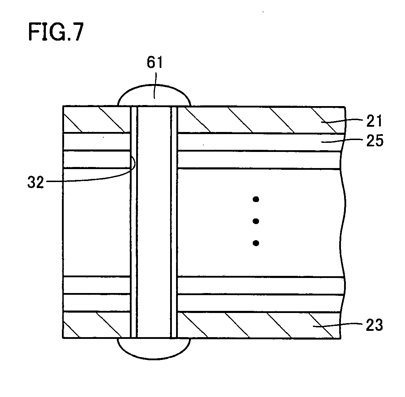

Fig. 7 is a cross-sectional view showing a fifth modification of the bipolar secondary battery of Fig. 1. Referring to Fig. 7, in the present modification, in place of bolt 35 of Fig. 1, a pin member 61 is provided. Pin member 61 has opposite ends clinched on end surfaces of cathode collector plate 21 and anode collector plate 23, whereby layers constituting bipolar secondary battery 10 are held together.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### Industrial Applicability

The preset invention is mainly applicable to an electric power supply of a hybrid vehicle using an internal combustion engine and a rechargeable power electric power supply as main power sources.

## Claims

1. An electrode stack, comprising:
a cathode (26) and an anode (28) stacked together; and
an electrolyte layer (27) arranged between said cathode (26) and said anode (28); wherein
a hole (32) penetrating in stacking direction of said cathode (26) and said anode (28) is formed in said cathode (26), said anode (28) and said electrolyte layer (27);
said electrode stack further comprising
a shaft member (35) inserted to said hole (32) for integrally holding said cathode (26), said anode (28) and said electrolyte (27).

2. The electrode stack according to claim 1, wherein
said shaft member (35) is a bolt.

3. The electrode stack according to claim 1, wherein
said shaft member (35) is formed of an insulating material.

4. The electrode stack according to claim 1, wherein
an insulating member (41) is arranged between an inner wall of said hole (32) and said bolt (35).

5. The electrode stack according to claim 1, wherein
said electrolyte (27) is a.solid electrolyte.

6. A bipolar secondary battery using the electrode stack according to claim 1.
